# EUROPÄISCHE PATENTSCHRIFT

(11) **EP 0 759 242 B1**
(45) Veröffentlichungstag und Bekanntmachung des Hinweises auf die Patenterteilung: **04.10.2000**
(21) Anmeldenummer: 95915188.7
(22) Anmeldetag: 05.04.1995
(51) Int. Cl.: H04L 25/02

(54) **DIGITALSIGNALÜBERTRAGENDE SCHALTUNG**
CIRCUIT FOR TRANSMITTING DIGITAL SIGNALS
CIRCUIT DE TRANSMISSION DE SIGNAUX NUMERIQUES

(30) Priorität: 07.04.1994 DE 4411816
(43) Veröffentlichungstag der Anmeldung: 26.02.1997
(73) Patentinhaber: DEUTSCHE THOMSON-BRANDT GMBH, 78048 Villingen-Schwenningen (DE)
(72) Erfinder: ROTHERMEL, Albrecht, D-78048 Villingen-Schwenningen (DE); SCHWEER, Rainer, D-78078 Niedereschach (DE); BLAUD, Phillippe, D-78052 Villingen-Schwenningen (DE)
(86) Internationale Anmeldenummer: EP9501248
(87) Internationale Veröffentlichungsnummer: WO9528049

(56) Entgegenhaltungen:
- EP-A- 0 391 571
- US-A- 3 974 404

## Beschreibung

Die Erfindung betrifft eine elektronische Schaltung zur Übertragung und/oder Verarbeitung von Signalen, insbesondere digitalen Signalen, gemäß dem Oberbegriff des Anspruchs 1.

Aufgrund des technischen Fortschritts bei der Signalverarbeitung und der Intergration elektronischer Schaltungsteile bzw. Schaltungen, auch kurz als ICs bezeichnet, sind zwischen diesen Schaltungen, z.B. in einem Fernsehgerät, immer mehr Digitalsignale mit jeweils immer höherer Taktfrequenz zu übertragen. Das bedeutet, daß auch mehr Verbindungsleitungen für die Digitalsignalübertragung benötigt werden.

Mit den herkömmlichen Übertragungsstandards, wie z.B. mit TTL-, CMOS- und ECL-Pegel, ergeben sich dabei zunehmend Probleme hinsichtlich der Leistungsaufnahme der ICs einerseits und der Störung empfindlicher Schaltungsteile, wie z.B. empfindlicher Empfangsteile eines Fernsehgerätes, durch Störstrahlungen andererseits.

Derartige Störungen lassen sich in vielen Fällen schon durch ausgesuchte Schaltungsanordnungen oder Leitungsführungen vermeiden. In anderen Fällen sind jedoch noch zusätzliche Schirmungsmaßnahmen gegen die durch die Übertragung digitaler Signale bedingte Störstrahlung erforderlich.

Aus der EP 391 571 ist eine elektronische Schaltung zur Übertragung von digitalen Signalen bekannt, die einen Eingangsverstärker mit einem niederohmigen Signaleingang aufweist Hierzu ist dem Signaleingang des Eingangsverstärkers ein Widerstand parallel geschaltet, der im wesentlichen den Eingangswiderstand bestimmt.

Es ist Aufgabe der Erfindung, die Störstrahlung bei einer Übertragung von digitalen Signalen zu vermindern.

Diese Aufgabe wird durch die im Anspruch 1 angegebene Erfindung gelöst. Vorteilhafte Weiterbildungen der Erfindung sind in den Unteransprüchen angegeben.

Der Erfindung liegt die Idee zugrunde, für eine störstrahlungsarme Datenübertragung den Spannungshub zwischen den Signalpegel High (H) und Low (L) auf den je ein Datensignal übertragenden Verbindungsleitungen zu reduzieren.

Im Prinzip wird dabei ein so niederohmiger Eingangswiderstand des jeweiligen ein Digitalsignal empfangenden Signaleingangs einer digitale Signale übertragenden und/oder verarbeitenden Schaltung, die Teil eines ICs sein kann, angestrebt, daß der jeweilige Signaleingang von der ihm jeweils zugeordneten, ihn speisenden Digitalsignal-Quelle stromgesteuert bzw. mit kleinem Spannungspegelhub gesteuert werden kann.

Der Eingangswiderstand wird erfindungsgemäß mit einem in Gate-Schaltung betriebenen als Signaleingangsverstärker verwendeten Transistor gebildet. Die jeweils einen Signaleingang über eine Verbindungsleitung speisende sehr hochohmige Digitalsignal-Quelle kann z.B. mit einem Open-Drain-Ausgang realisiert sein.

Die Stromsteuerung des niederohmigen Signaleingangs eines jeweiligen Eingangsverstärkers mit einer hochohmigen Signalquelle bewirkt dabei einen kleinen Pegelhub, der seinerseits eine drastisch verminderte Störstrahlung insbesondere auf den je ein Datensignal führenden Verbindungsleitungen zur Folge hat.

Die Stromsteuerung des jeweiligen Signaleingangs hat ferner zur Folge, daß sich durch die Schaltungsauslegung des jeweiligen ein Digitalsignal empfangenden Signaleingangsverstärkers der Pegelhub bzw. zumindest einer der logischen Pegel, die sich am Signaleingang einstellen, bestimmen läßt, wobei es nicht der Eingangswiderstand ist, der den Spannungspegel bestimmt, sondern im wesentlichen die Referenzspannung am Gate eines in Gate-Schaltung betriebenen Feldeffekttransistors, die z.B. als Signaleingangsverstärker verwendet wird. Aus diesem Grund ist dieses Prinzip der erfindungsgemäßen Stromsteuerung des Signaleingangs insbesondere für die Übertragung von digitalen Signalen zwischen verschiedenen ICs mit CMOS-Technologie von herausragender Bedeutung, da diese Stromsteuerung auch zwischen derartigen ICs eine Digitalsignalübertragung mit einem kleinen störstrahlungsarmen Pegelhub ermöglicht. Ferner wird mit dieser Stromsteuerung des jeweiligen Signaleingangs gewährleistet, daß z.B. unterschiedliche Massepotentiale von digitale Signale sendenden und digitale Signale empfangenden IC's innerhalb bestimmter Grenzen keinen Einfluß haben auf einen erkannten Signalpegel am jeweiligen Signaleingang des die digitalen Signale empfangenden IC's.

Mit der Verwendung eines Open-Drain-Ausgangs als Digitalsignal-Quelle ist zudem der Vorteil verbundene daß eine Datenübertragung leistungsarm erfolgen kann, wobei mit der vorgenannten Stromsteuerung des niederohmigen Signaleingangs eine Einkopplung von Fremdsignalen bzw. -spannungen insbesondere auf die jeweilige Verbindungsleitung drastisch verringert und damit die notwendige Störsicherheit des kleinen Digitalsignal-Pegelhubs gewährleistet wird. Aufgrund des kleinen Pegelhubs auf der jeweiligen Verbindungsleitung sind die Umladeverluste relativ gering. Damit wird auch der Verlustleistungbedarf der Gesamtschaltung geringer.

Es hat sich erwiesen, daß sich mit einer derartigen Signalübertragung sehr hohe Datenraten übertragen lassen, woraus sich die Notwendigkeit ergeben kann, die Leitungseigenschaften der Verbindungsleitungen mitzuberücksichtigen. Dies ist nämlich immer dann der Fall, wenn die Signallaufzeit in die Größenordnung der Signalanstiegsgeschwindigkeit kommt.

Auf einer Leiterplatte, die üblicherweise heute für die gemeinsame Anordung von ICs verwendet wird, kann von einer relativen Dielektrizitätskonstante von ca. 3,5 ausgegangen werden. Damit ergibt sich eine Signallaufzeit von ca. 0,5 ns für 10 cm Leitungslänge. Das bedeutet natürlich grundsätzlich, daß die Reflexionen an den Leitungsenden möglichst klein gehalten werden müssen. Daraus ergibt sich die Forderung, die jeweilige Verbindungsleitung mit ihrem Wellenwiderstand abzuschließen.

Wenn nun der Eingangswiderstand des jeweiligen Signaleingangs dem Wellenwiderstand der jeweiligen Verbindungsleitung gleicht, ist natürlich der Spannungshub am jeweiligen Signaleingang dieses digitale Signale empfangenden IC's nicht mehr beliebig klein. Als Größenordnung ergibt sich bei einem Strom von z.B. 2mA für die Datenübertragung und einem Wellenwiderstand von z.B. 150 Ohm dann ein Signalhub von 300 mv am jeweiligen Signaleingang des digitale Signale empfangenden IC's. Dieser Signalhub ist also durch die Leitungseigenschaften vorgegeben und wird nicht durch die Verstärkereigenschaften des jeweiligen Signaleingangsverstärkers des digital Signale empfangenden IC's begrenzt.

Hierzu sei noch bemerkt, daß eine Verkleinerung des Eingangswiderstandes unter den Wellenwiderstand zum Zwecke der Verringerung der Störstrahlung nicht sinnvoll wäre, weil sich eine hochfrequente transiente Stromeinspeisung aus dem jeweiligen Signalausgang des digitale Signale sendenden IC's in die Verbindungsleitung sowieso in einem Spannungssprung von in diesem Falle 300 mV am jeweiligen Signalausgang des digitale Signale sendenden IC's auswirken würde.

Die Erfindung wird nachfolgend in einem Ausführungsbeispiel anhand einer Zeichnung näher erläutert.

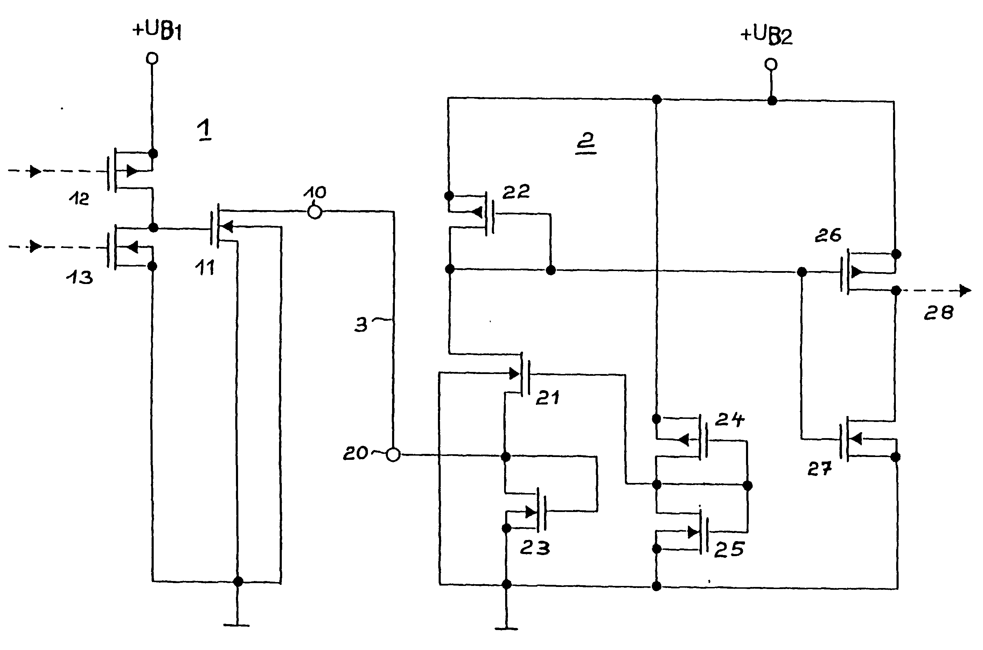

Die einzige Figur zeigt, durch eine der Übertragung eines Digitalsignals dienende Verbindungsleitung 3 miteinander verbundene Schaltungsanordnungen 1 und 2, im folgenden erste und zweite Schaltungsanordnung genannt, die beide in je einen IC integriert werden können. Die erste Schaltungsanordnung 1 bildet dabei den Teil eines ein digitales Signal sendenden IC's und die zweite Schaltungsanordnung 2 den Teil eines das digitale Signal empfangenden IC's. Die Verbindungsleitung 3 kann z.B. durch eine Leiterbahn einer Leiterplatte realisiert sein.

Die Verbindungsleitung 3 verbindet den Digitalsignalausgang 10 eines als Open-Drain geschalteten Feldeffekttransistor 11, mit dem eine von mehreren gleichartigen Signalausgangsstufen der ersten Schaltungsanordnung 1 dargestellt sein soll, mit dem Signaleingang 20 einer als Gate-Schaltung mit einem Feldeffekttransistor 21 ausgebildeten Eingangsstufe der zweiten Schaltungsanordnung 2. Die Anssteuerung der jeweiligen Signalausgangsstufen der ersten Schaltungsanordnung 1 erfolgt jeweils über komplementäre Feldeffekttransistoren, wie es mit den komplementären Feldeffekttransistoren 12 und 13, die zwischen Bezugspotential (Masse) und einer positiven Betriebsspannung +U_{B1} in Reihe geschaltet sind, für die Ansteuerung von Transistor 11 dargestellt ist.

Mit der als Gate-Schaltung ausgebildeten Eingangsstufe ist eine von mehreren gleichartigen Eingangestufen der zweiten Schaltungsanordnung 2 dargestellt. Der in Gate-Schaltung betriebene Transistor 21 ist wie der als Open-Drain geschaltete Transistor 11 der jeweiligen Ausgangsstufe vorzugsweise ein n-Kanal Typ.

Als Last für den Transistor 21 der jeweiligen Eingangsstufe ist erfindungsgemäß ein in Diodenschaltung betriebener p-Kanal Transistor 22 vorgesehen, der zwischen der Betriebsspannung +U_{B2} der zweiten Schaltungsanordnung 2 und dem Drainanschluß von Transistor 21 geschaltet ist. Dabei bildet die Verbindung des Drainanschlusses von Transistor 21 mit dem kurzgeschlossenen Drain und Gate von Transistordiode 22, im folgenden zweite Transistordiode 22 genannt, den Signalausgang der jeweiligen Eingangsstufe, von der aus das verstärkte Digitalsignal dem Signaleingang einer weiteren an sich bekannten verstärkenden Stufe zugeführt wird.

Mit dieser zwischen Masse und der Betriebsspannung +U_{B2} geschalteten bekannten Stute, die aus zwei im Gegentakt arbeitenden komplementären Feldeffekttransistoren 26 und 27 besteht, wird das in der Spannungsamplitude bereits verstärkte Digitalsignal z.B. auf vollen CMOS-Pegelhub weiterverstärkt für eine interne Signalverarbeitung, z.B. innerhalb der zweiten Schaltungsanordnung 2, was mit der Signalweiterleitung durch die einen Pfeil aufweisende gestrichelte Linie 28 am Signalausgang dieser Stufe symbolisch dargestellt sein soll.

Der mit einem Digitalsignaleingang 20 verbundene Sourceanschluß des jeweiligen in Gate-Schaltung betriebenen Transistor 21 ist erfindungsgemäß über einen in Diodenschaltung betriebenen n-Kanal Feldeffekttransistor 23, im folgenden erste Transistordiode 23 genannt, mit Masse verbunden. Die Arbeitsweise dieser Transistordiode 23 sowie die der zweiten Transistordiode 22 ist später beschrieben.

Zur Erzeugung eines konstanten Gate-Potentials des jeweiligen in Gateschaltung betriebenen Transistor 21 werden vorzugsweise zwei komplementäre in Diodenschaltung betriebene Feldeffekttransistoren 24 und 25 verwendet. Diese beiden in Diodenschaltung betriebenen Transistoren 24 und 25, im folgenden dritte und vierte Transistordiode 24 und 25 genannt, sind zwischen der Betriebsspannung +U_{B2} und Masse in Reihe geschaltet. Die Realisierung der Spannungsquelle mit der dritten und vierten Transistordiode 24, 25 macht die Schaltungsanordnung robust gegenüber Prozeßdatenstreuungen sowie gegenüber Temperatur- und Betriebsspannungsschwankungen.

Die Arbeitsweise der beispielhaften Schaltungsanordnungen 1 und 2, die vorzugsweise mit selbstsperrenden Enhancement-Mosfets realisiert sind, wird nun nachfolgend näher beschrieben:

Wenn der jeweilige Ausgangstransistor 11 der digitale Signale sendenden Schaltungsanordnung 1 eingeschaltet wird und dadurch L-Pegel führt, fließt aus der Betriebsspannungsquelle U_{B2} ein entsprechender Strom über die zweite Transistordiode 22 und den in Gate-Schaltung betriebenen Transistor 21 der Eingangsstufe über die Verbindungsleitung 3 in den Ausgangstransistor 11.

Neben ihrer Funktion als Arbeitswiderstand sorgt die zweite Transistordiode 22, aufgrund der bei Feldeffekttransistordioden charakteristischen gekrümmten Diodenkennlinie, auch für eine sichere Funktion der Schaltung bei Betriebsspannungs- und Temperaturschwankungen sowie bei Parameterstreuungen der Transistoren. Würde nämlich der Drain von Transistor 21 bei L-Pegel z.B. aufgrund von einem oder mehreren der vorgenannten Einflüsse die Tendenz haben, das Sourcepotential zu erreichen, würde das Sourcepotential sich zum Bezugspotential (Masse) hin bewegen. Dieser Effekt wird im wesentlichen mit der zweiten Transistordiode 22 verhindert, indem diese dafür sorgt, daß, wenn im ungünstigsten Fall das Drainpotentials von Transistor 21 zu weit absinken möchte, ihr Innenwiderstand immer niederohmiger wird, wodurch das Drainpotential im Prinzip dann festgehalten wird und damit ein weiteres Absinken des Sourcepotentials von Transistor 21 vermieden, bzw. zumindest so weit abgeschwächt wird, daß die Funktion der Schaltung nicht beeinträchtigt wird.

Wenn nun der jeweilige Ausgangstransistor 11 der digitale Signale sendenden Schaltungsanordnung 1 ausgeschaltet wird und dadurch H-Pegel führt, ist die Verbindungsleitung 3 praktisch stromlos.

Falls dadurch die als Gate-Schaltung ausgebildete Eingangsstufe nun auch stromlos gesteuert sein würde, könnten Ladungseinkopplungen, wie z.B. durch Influenz, auf der Verbindungsleitung 3 den Signaleingang 20 auf ein höheres Potential anheben, so daß das Sourcepotential von Transistor 21 in Richtung des positiven Potentials der Betriebsspannung U_{B2} weglaufen würde. Dieses wird dadurch vermieden, daß die erste Transistordiode 23 gerade so viel Strom zieht, daß eventuelle aufgrund vorgenannter Störeinflüsse entstehende Ladungen am Signaleingang 20 abwandern können.

Dadurch, daß bei H-Signal am jeweiligen Ausgangstransistor 11 die erste Transistordiode 23 einen Strom zieht, trägt sie dazu bei, daß auch bei H-Pegel am Signaleingang 20 die Verbindungsleitung 3 näherungsweise mit ihrem Wellenwiderstand abgeschlossen ist.

Im erfindungsgemäßen Zusammenwirken mit der zweiten Transistordiode 22, indem diese wie bereits erwähnt ein zu weites Absinken des Drainpotentials von Transistor 21 verhindert, sorgt die erste Transistordiode 23 ferner dafür, daß bei sogenannten Überschwingern, die z.B. beim Umschalten von L-nach H-Pegel auf der Verbindungsleitung 3 auftreten können, der Eingangswiderstand des Signaleingangs 20 praktisch nicht über den Wellenwiderstand der Verbindungsleitung 3 ansteigen kann. Würde nämlich bei H-Pegel am Signaleingang 20 die Eingangsstufe völlig stromlos werden, dann wäre die Verbindungsleitung nicht mehr abgeschlossen.

Dieses Prinzip der Digitalsignalübertragung mit kleinem logischen Pegelhub hat zudem den Vorteil, daß die jeweilige Ausgangsstufe der die digitale Signale sendenden Schaltungsanordnung 1 mit relativ kleinen Feldeffekttransistoren ausgebildet werden kann, wobei mit "klein" im wesentlichen die Kanalbreite des jeweiligen Ausgangstransistors 11 gemeint ist.

Bei einer erprobten Schaltung wurden selbstsperrende Enhancement-Mosfets mit folgenden Kanal-Parametern verwendet.

| Transistor [Bezugszeichen] | Kanalbreite [in µm] | Kanallänge [in µm] |
|---|---|---|
| 11 | 15 | 0,7 |
| 21 | 200 | 0,7 |
| 22 | 36 | 0,7 |
| 23 | 50 | 0,7 |
| 24 | 22 | 0,7 |
| 25 | 11 | 0,7 |
| 26 | 22 | 0,7 |
| 27 | 11 | 0,7 |

## Patentansprüche

1. Elektronische Schaltung zur Übertragung und/oder Verarbeitung von digitalen Signalen mit wenigstens einem jeweils ein Signal empfangenden Signaleingang (20), **dadurch gekennzeichnet**, daß der Eingangswiderstand des Signaleingangs (20) mit einem in Gate-Schaltung betriebenen und mit einem bestimmten konstanten Gate-Potential gespeisten Feldeffekttransistor (21) in Verbindung mit einem in Diodenschaltung arbeitenden Transistor (23) gebildet wird, der zwischen dem den Signaleingang (20) bildenden Sourceanschluß des in Gate-Schaltung arbeitenden Feldeffekttransistors (21) und Bezugspotential geschaltet ist.

2. Elektronische Schaltung nach Anspruch 1, **dadurch gekennzeichnet**, daß der in Diodenschaltung betriebene Transistor (23) ein Feldeffekttransistor ist.

3. Elektronische Schaltung nach einem oder mehreren der vorangehenden Ansprüche 1 bis 2, **dadurch gekennzeichnet**, daß der in Gate-Schaltung betriebene Feldeffekttransistor (21) mit einer Last betrieben wird, die zwischen dem den Signalausgang bildenden Drainanschluß und einer Betriebsspannung (+U_{B2}) geschaltet ist und mit einem zweiten in Diodenschaltung arbeitenden Transistor (22) gebildet wird.

4. Elektronische Schaltung nach Anspruch 3, **dadurch gekennzeichnet**, daß der zweite in Diodenschaltung betriebene Transistor (22) ein Feldeffekttransistor ist.

5. Elektronische Schaltung nach einem oder mehreren der vorangehenden Ansprüche 3 bis 4, **dadurch gekennzeichnet**, daß der zweite in Diodenschaltung betriebene Transistor (22) vom komplementären Typ sowohl zum in Gate-Schaltung arbeitenden Transistor (21) als auch zum ersten in Diodenschaltung arbeitenden Transistor (23) ist.

6. Elektronische Schaltung nach einem oder mehreren der vorangehenden Ansprüche 1 bis 5, **dadurch gekennzeichnet**, daß zur Erzeugung eines konstanten Gate-Potentials des in Gate-Schaltung betriebenen Feldeffekttransistors (21) eine Spannungsquelle verwendet wird.

7. Elektronische Schaltung nach Anspruch 6, **dadurch gekennzeichnet**, daß die Spannungsquelle mit in Reihe geschalteten Dioden gebildet wird, die vorzugsweise mit in Diodenschaltung betriebenen Feldeffekttransistoren (24, 25) realisiert sind.

## Claims

1. Electronic circuit for transmitting and/or processing digital signals having at least one signal input (20), in each case receiving a signal, characterized in that the input resistance of the signal input (20) is formed by a field-effect transistor (21) operated in gate connection and fed with a specific constant gate potential in conjunction with a transistor (23) operating in diode connection, which transistor is connected between the source terminal, forming the signal input (20), of the field-effect transistor (21) operating in gate connection, and reference potential.

2. Electronic circuit according to Claim 1, characterized in that the transistor (23) operated in diode connection is a field-effect transistor.

3. Electronic circuit according to one or more of the preceding Claims 1 to 2, characterized in that the field-effect transistor (21) operated in gate connection is operated with a load which is connected between the drain terminal, forming the signal output, and an operating voltage (+U_{B2}) and is formed by a second transistor (22) operating in diode connection.

4. Electronic circuit according to Claim 3, characterized in that the second transistor (22) operated in diode connection is a field-effect transistor.

5. Electronic circuit according to one or more of the preceding Claims 3 to 4, characterized in that the second transistor (22) operated in diode connection is of the complementary type both with respect to the transistor (21) operating in gate connection and with respect to the first transistor (23) operating in diode connection.

6. Electronic circuit according to one or more of the preceding Claims 1 to 5, characterized in that a voltage source is used for generating a constant gate potential of the field-effect transistor (21) operated in gate connection.

7. Electronic circuit according to Claim 6, characterized in that the voltage source is formed by series-connected diodes, which are preferably realized by field-effect transistors (24, 25) operated in diode connection.

## Revendications

1. Circuit électronique de transmission et/ou de traitement de signaux numériques avec au moins une entrée de signal (20) servant à recevoir un signal, **caractérisé en ce que** la résistance d'entrée de l'entrée de signal (20) est constituée d'un transistor à effet de champ (21) qui fonctionne dans une grille commune et est alimenté à l'aide d'un potentiel de grille défini, constant et qui est relié à un transistor (23) fonctionnant dans un circuit à diode, ce transistor (23) étant placé entre la borne de source (constituant l'entrée de signal (20)) du transistor à effet de champ (21) qui fonctionne dans une grille commune et le potentiel de référence.

2. Circuit électronique conforme à la revendication 1, **caractérisé en ce que** le transistor (23) fonctionnant dans le circuit à diode est un transistor à effet de champ.

3. Circuit électronique conforme à l'une ou à plusieurs des revendications 1 à 2, **caractérisé on ce que** le transistor à effet de champ (21) qui fonctionne dans une grille commune est activé à l'aide d'une charge située entre la borne de drain constituant la sortie de signal et une tension de fonctionnement (+U_{B2}) et est constitué d'un second transistor (22) fonctionnant dans un circuit à diode.

4. Circuit électronique conforme à la revendication 3, **caractérisé en ce que** le second transistor (22) fonctionnant dans un circuit à diode est un transistor à effet de champ.

5. Circuit électronique conforme à l'une ou à plusieurs des revendications 3 à 4, **caractérisé en ce que** le second transistor (22) fonctionnant dans le circuit à diode est complémentaire au transistor (21) qui fonctionne dans une grille commune ainsi qu'au premier transistor qui fonctionne dans le circuit à diode.

6. Circuit électronique conforme à l'une ou à plusieurs des revendications 1 à 5, **caractérisé en ce qu'**une source de tension est utilisée pour produire le potentiel de grille constant du transistor à effet de champ (21) fonctionnant dans la grille commune.

7. Circuit électronique conforme à la revendication 6, **caractérisé en ce que** la source de tension est constituée de diodes montées en série et réalisées de préférence avec des transistors à effet de champ (24, 25) fonctionnant dans un circuit à diode.
